# EUROPÄISCHE PATENTSCHRIFT

(11) **EP 0 461 379 B1**
(45) Veröffentlichungstag und Bekanntmachung des Hinweises auf die Patenterteilung: **05.01.1994**
(21) Anmeldenummer: 91107065.4
(22) Anmeldetag: 02.05.1991
(51) Int. Cl.: B60R 5/04

(54) **Laderaumabdeckung für Kraftwagen, insbesondere für Kombinations-Personenkraftwagen**
Load compartment cover for vehicles, in particular for station wagons
Couvercle pour le compartiment de charge d'un véhicule, notamment d'une voiture familiale

(30) Priorität: 13.06.1990 DE 4018858
(43) Veröffentlichungstag der Anmeldung: 18.12.1991
(73) Patentinhaber: PETER BUTZ GmbH & Co Verwaltungs-KG, 40764 Langenfeld (DE)
(72) Erfinder:
(74) Vertreter: Ostriga, Harald

(56) Entgegenhaltungen:
- EP-A- 0 345 438
- DE-U- 7 805 453
- FR-A- 1 168 737
- US-A- 4 480 675

## Beschreibung

Die Erfindung betrifft eine Laderaumabdeckung für Kraftwagen, insbesondere für Kombinations-Personenkraftwagen entsprechend dem Oberbegriff des Anspruchs 1. Eine solche Laderaumabdeckung ist durch die DE-C-33 14 444 bekanntgeworden.

Die bekannte Laderaumabdeckung wird insoweit als verbesserungsbedürftig empfunden, als nach zeitweiligem Nichtgebrauch der Abdeckplane das Wiedereinführen der tragestabendseitig angeordneten Führungskörper in die endstirnseitig offenen oder zu öffnenden Führungsschienen eine erhöhte Aufmerksamkeit erfordert.

Ausgehend von der bekannten Laderaumabdeckung gemäß der DE-C-33 14 444, liegt daher der Erfindung die Aufgabe zugrunde, die bekannte Laderaumabdeckung so auszugestalten, daß nicht nur die Entnahme der zeitweilig nicht gebrauchten Abdeckplane sondern auch deren erneutes Wiedereinsetzen in die Führungsschienen einfacher und rascher als bisher geschieht.

Diese Aufgabe wurde entsprechend der Erfindung auf höchst einfache Weise dadurch gelöst, daß an zwei diametral gegenüberliegenden Stellen der beiden Führungsschienen ein Teillängenbereich des jeweils oberen Profilsteges ein gesondertes Abdeckteil bildet, welches eine obere Zugangsöffnung für die Führungskörper und gegebenenfalls letztere miteinander verbindender Kupplungsteile freigibt oder verschließt.

Diese höchst einfache erfindungsgemäße Lösung gestattet in ergonomisch besonders günstiger Weise sowohl eine Entnahme der Abdeckplane als auch deren Wiedereinsetzen mittels zweier von den oberen Profilstegen gebildeter gesonderter Abdeckteile, die, sobald sie geöffnet sind, eine obere Zugangsöffnung freigeben.

Entsprechend weiteren Merkmalen der Erfindung bildet das gesonderte Abdeckteil eine einseitig an der Führungsschiene angelenkte Klappe.

Für den Fall, daß entsprechend weiteren Erfindungsmerkmalen sich die Anlenkachse der Klappe etwa parallel zu den Tragestab-Längsachsen erstreckt und insbesondere jede Klappe benachbart dem schließ- oder öffnungsseitigen Ende einer Führungsschiene angeordnet ist, eröffnen sich besonders vorteilhafte erfindungsgemäße Merkmale:

Diese bestehen darin, daß die Anlenkachse der Klappe der Zugangsöffnung der Führungskörper abgewandt ist, derart, daß die Oberseite der sich an die Innenfläche des unteren Profilsteges anlegenden geöffneten Klappe eine etwa rampenartige Schrägfläche für die Führungskörper bzw. für die mit letzteren verbundenen Kupplungsteile bildet.

Wenn man beim praktischen Gebrauch der erfindungsgemäßen Laderaumabdeckung die Abdeckplane erneut einsetzen will, werden hierzu beide vorzugsweise benachbart der Kofferraumtür - also schließseitig - angeordneten Klappen niedergedrückt und die Führungskörper des in Öffnungsrichtung vorderen Tragestabes über die rampenartige Schrägfläche in das Schienenprofil hinein- und die anderen Führungskörper nachgeschoben. Dieses kann auch en bloc geschehen, wenn man sich etwa klammerartiger oder anders ausgebildeter Kupplungsteile bedient, welche die Führungskörper der Abdeckplane in geordneter Folge endseitig derart zusammenfassen, daß die gesamte Abdeckplane gewissermaßen eine einbaufertige Montageeinheit bildet. In einem solchen Falle wird die gesamte Montageeinheit über die beiden im geöffneten Zustand rampenartige Schrägflächen darstellenden Klappen in das Führungsprofil hineingeschoben.

Wesentlich ist, daß das vom oberen Profilsteg gebildete gesonderte Abdeckteil, insbesondere die Klappe, die Zugangsöffnung bei deren Nichtgebrauch verschließt. Ein solcher Verschluß kann in jedweder praktischen Weise ausgeführt sein. So ist es z.B. möglich, das der Anlenkachse gegenüberliegende schmalseitige Ende der Klappe mit Rastmitteln (Rastnocken oder Rastnase) zu versehen, die mit entsprechenden Gegenrastmitteln des raumfesten schienenseitigen oberen Profilsteges zusammenwirken.

Auch sieht die Erfindung - jedoch in keinesfalls obligatorischer Weise - vor, daß das gesonderte Abdeckteil, insbesondere die Klappe, nur entgegen der Rückstellkraft einer Feder, insbesondere einer Schenkelfeder, zu öffnen ist.

In weiterer Ausgestaltung der Erfindung ist die Anlenkachse zwischen der Einführöffnung und einem - vorteilhaft in Schließrichtung - geschlossenen Aufnahmeraum für je einen Führungskörper eines von der Einführrichtung wegweisenden schließ- oder öffnungsseitig äußeren Tragestabes angeordnet. Diese sinnvolle erfindungsgemäße Ausgestaltung bewirkt, daß der in Schließrichtung vorderste Tragestab gegen ein versehentliches Herausziehen aus dem Führungsprofil gesichert ist. Wenn nun die Abdeckplane bei einer solchen Ausführungsform entnommen werden soll, genügt es, den in Schließrichtung vordersten Tragestab in Öffnungsrichtung unter der geschlossenen Klappe hindurchzuschieben, diese sodann zur Bildung einer rampenartigen Schrägfläche zu öffnen und über diese hinweg nachfolgend die gesamte Abdeckplane (nach deren öffnungsseitiger Entriegelung) durch die so gebildete Zugangsöffnung gänzlich aus dem Führungsprofil herauszuziehen.

Zusätzliche erfindungsgemäße Ausgestaltungen ergeben sich aus weiteren Unteransprüchen.

In den Zeichnungen sind bevorzugte Ausführungsbeispiele entsprechend der Erfindung näher dargestellt, es zeigt:
Fig. 1 eine Draufsicht auf eine Laderaumabdeckung mit geschlossener Abdeckplane,
Fig. 2 einen teilweisen Vertikalschnitt bei geschlossener Klappe, etwa in natürlicher Größe entsprechend der Schnittlinie II-II in Fig. 1,
Fig. 3 eine Fig. 2 grundsätzlich entsprechende Darstellung, jedoch bei geöffneter Klappe und
Fig. 4 die Fig. 3 entsprechende Anordnung (also mit geöffneter Klappe), bei welcher gezeigt ist, wie eine Abdeckplane als einbaufertige Montageeinheit in die führungsschienenseitige Einführöffnung eingesetzt wird.

In den Zeichnungen ist eine Laderaumabdeckung, völlig losgelöst von irgendwelchen Karosserieteilen dargestellt, insgesamt mit der Bezugsziffer 10 bezeichnet.

Die Laderaumabdeckung 10 weist zwei im Parallelabstand gegenüberliegend in derselben Höhenebene angeordnete Führungsschienen 11 auf, in welchen Führungskörper 13 entlang der Bewegungsrichtung des mit x bezeichneten Doppelpfeiles hin- und herverschieblich sind. Die Tragestäbe 12, welche von der Abdeckbahn 14 aufgenommen und mit dieser verschweißt sind, sind in den Zeichnungen nicht sichtbar dargestellt sondern lediglich durch ihre Längsmittelachsen versinnbildlicht.

Die Tragestäbe 12 erstrecken sich mit ihren Längsachsen rechtwinklig zu den Längsachsen der Führungsschienen 11, d.h. rechtwinklig zur Bewegungsrichtung x.

Die Öffnungsrichtung der insgesamt mit 15 bezeichneten, im wesentlichen aus Tragestäben 12 mit Führungskörpern 13 und Abdeckbahn 14 bestehenden Abdeckplane ist mit A bezeichnet. Die entgegengesetzte Schließrichtung trägt die Bezeichnung B.

Aus dem Zusammenhang aller Figuren ist zu ersehen, wie eine Führungschiene 11 aufgebaut ist. Diese weist einen oberen Profilsteg 16, einen unteren Profilsteg 17 und einen beide Profilstäbe 16, 17 miteinander verbindenden Profilboden 18 auf.

An dem in Schließrichtung B vordersten Endbereich einer jeden Führungsschiene 11, also benachbart der Zugangsseite T des nicht dargestellten Kofferraums, weist jeder obere Profilsteg 16 eine Klappe 19 auf, deren in Schließrichtung B vordere Schmalseite mittels einer Anlenkachse 20 am raumfesten oberen Profilsteg 16 schwenkbar angelenkt ist. Und zwar ist die Anlenkachse 20 unterseitig des oberen Profilstegs 16 angeordnet.

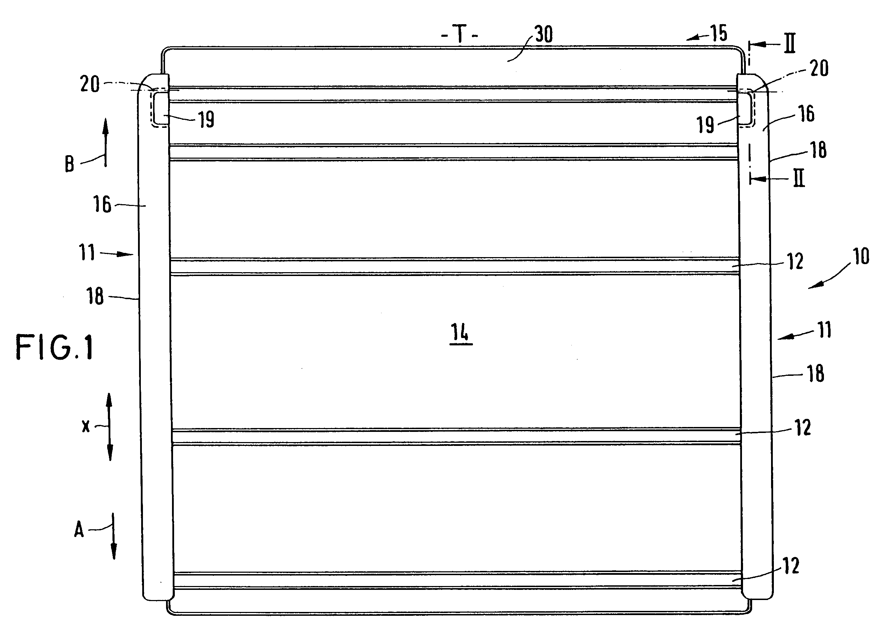

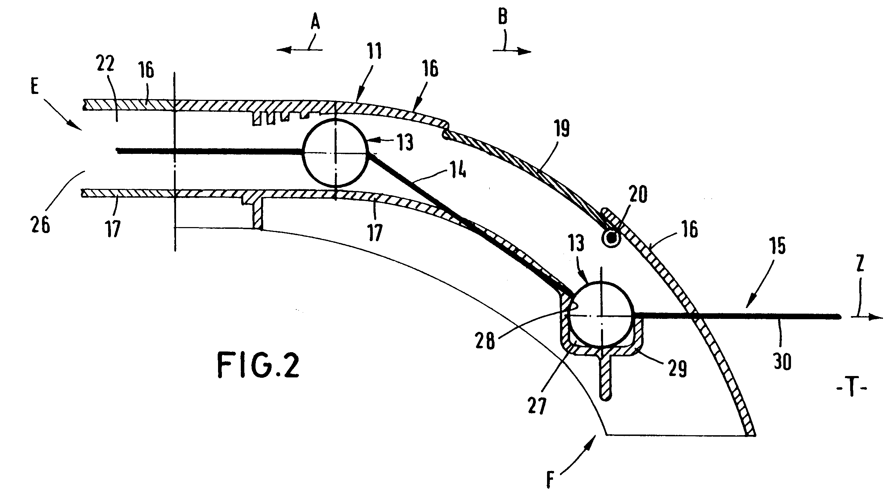

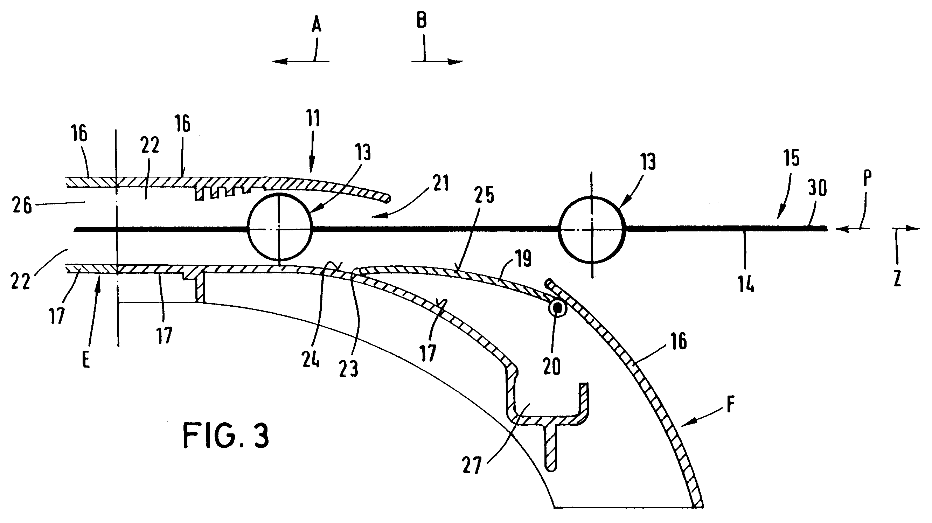

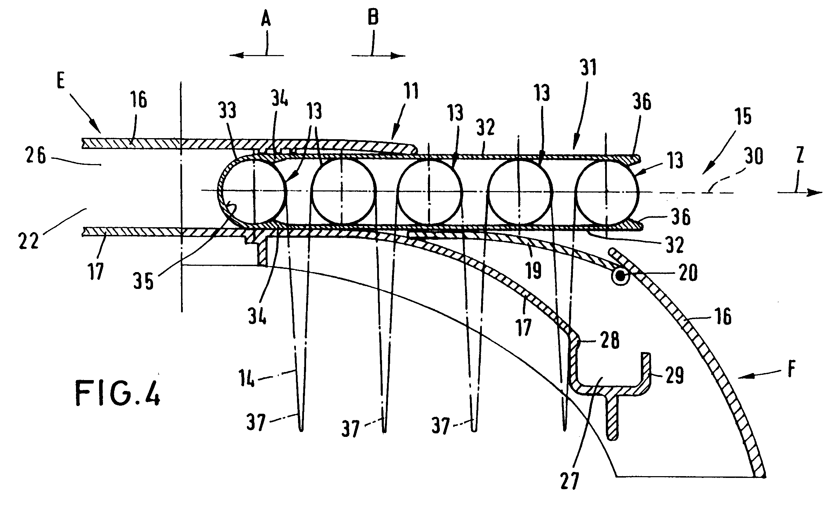

Die geöffnete Klappe 19 gibt somit eine Zugangsöffnung 21 frei (s. Fig. 3 und 4) oder verschließt diese (s. Fig. 1 und 2). Die Zugangsöffnung 21 stellt sowohl eine Einführ- als auch eine Entnahmeöffnung dar.

Die Funktion der dargestellten Laderaumabdeckung ist folgende: Gemäß Fig. 3 ist die Klappe 19 niedergedrückt, was beispielsweise entgegen der Rückstellkraft einer die Anlenkachse 20 umgebenden, nicht dargestellten Schenkelfeder geschehen kann. Im niedergedrückten Zustand könnte die Klappe 19 mittels nicht dargestellter Arretiermittel leicht lösbar festgelegt werden.

Aus Fig. 3 wird deutlich, daß die gesamte Abdeckplane 15, welche im wesentlichen aus der Abdeckbahn 14 mit Tragstangen 12 und endseitigen Führungskörpern 13 besteht, ohne weiteres in Zugrichtung Z aus dem Innenraum 22 der Führungsschienen 11 herausgezogen und umgekehrt in Druckrichtung P in den Innenraum 22 der Führungsschienen 11 und zwar jeweils durch die Einführöffnung 21 hindurch, hineingeschoben werde kann.

Hierbei legt sich der von der Anlenkachse 20 abgewandte schmalseitige Rand 23 der Klappe 19 auf die Innenfläche des unteren Profilsteges 17 auf und bildet hierbei mit ihrer nach oben weisenden Deckfläche eine rampenartige Schrägfläche 25.

Diese rampenartige Schrägfläche 25 erleichtert in ohne weiteres einsehbarer Weise sowohl den Entnahmevorgang (in Zugrichtung Z) als auch den Einführvorgang (in Druckrichtung P) der Abdeckplane 15 erheblich.

Lediglich ergänzend sei noch eingefügt, daß der Profilboden 18 aus den Schnittzeichnungen der Fig. 2-4 nicht zu ersehen ist, da die Betrachtungsweise in die Papierebene hineingeht, so daß lediglich der zwischen den beiden Profilstegen 16, 17 gebildete führungschienenseitige Längsschlitz 26 zu erkennen ist.

In Fig. 2 ist bei geschlossener Klappe 19 die eingebaute Abdeckplane 15 in ihrer Geschlossenstellung dargestellt. Unter Bezugnahme auf die Ausführungen im Zusammenhang mit Fig. 3 wurde der Zustand gemäß Fig. 2 wie folgt erreicht: Nachdem sämtliche Führungskörper in Einführrichtung, d.h. in Öffnungsrichtung A, in den schienenseitigen Innenraum 22 hineingeschoben sind, wird die Klappe 19 geschlossen und mittels nicht dargestellter Rast- oder anderer Arretiermittel am raumfesten oberen Profilsteg 16 lösbar festgelegt. Sodann wird die Abdeckplane 15 um einen gewissen Teilbetrag im wesentlichen in Schließrichtung B bewegt, derart, daß der in Schließrichtung B vorderste Tragestab mit seinen Führungskörper 13 unter der Klappe 19 hinweg in einen der Kofferraum-Zugangsseite T unmittelbar benachbarten Aufnahmeraum 27 hineingelangt und dort mittels eines Rastnockens 28 an der Innenfläche 24 des unteren Profilstegs 17 arretiert wird. Hierbei ist die in Richtung T weisende Begrenzung 29 des Raumes 27 so ausgebildet, daß ein Bewegen des Zugendes 30 der Abdeckplane 15 einerseits nicht behindert wird, andererseits aber der T benachbarte Führungskörper 13 in Zugrichtung Z festgelegt und somit gegen unbeabsichtigtes Herausziehen gesichert ist.

Die in Fig. 4 dargestellte Variante gestattet grundsätzlich eine ähnliche Funktion, wie im Zusammenhang mit den Fig. 2 und 3 dargestellt. In Fig. 4 ist indes gezeigt, wie die die Führungskörper 13 endseitig übergreifende, etwa haarnadelförmige Kupplungsklammer 31, die gesamte Abdeckplane 15 zu einer Baueinheit zusammenfassen kann. Hierzu besitzt die die Führungskörper 13 aneinanderkuppelnde Klammer 31 zwei Klammerschenkel 32, die über einen Klammersteg 33 miteinander verbunden sind. Benachbart des Klammersteges 33 begrenzen zwei Rastnocken 34 eine Rastöffnung 35, in welcher der in Öffnungsrichtung A jeweils vordere Führungskörper 13 nahezu unlösbar bzw. schwer lösbar festgelegt ist. Eine leichtere Lösbarkeit in Zugrichtung Z aus dem Formschluß der Kupplungsklammer 31 gestatten jedoch die an den freien Klammerschenkelenden vorgesehenen beiden Rastbuckel 36.

Aus Fig. 4 ist auch noch zu ersehen, daß die Abdeckbahn 14 bei der zu einer zusammengeschobenen Baueinheit verwandelten Abdeckplane 15 gemäß Fig. 4 Einfaltbereiche 37 bildet.

Fig. 2-3 zeigen auch, daß die Führungsschiene 11 jeweils aus einem Führungsschienenabschnitt E und aus einem Führungsschienen-Ansatz F besteht, welche beide mindestens mittelbar raumfest karosserieseitig gehalten, in im einzelnen nicht dargestellter Weise aneinander angeschlossen sind.

In Anpassung an die Bauform der Karosserie ist der Führungsschienen-Ansatz F nach unten abgebogen. Der Führungsschienen-Ansatz F stellt zweckmäßig ein aus geeignetem Kunststoff hergestelltes Spritzgußteil dar, während der Führungsschienenabschnitt E aus Leichtmetall-Strangguß bestehen kann.

## Patentansprüche

1. Laderaumabdeckung für Kraftwagen, insbesondere für Kombinations-Personenkraftwagen, mit zwei im Querabstand voneinander distanzierten, karosserieseitig befestigten, C-förmig profilierten, mit ihren Längsschlitzen einander zugekehrten, Führungsschienen zur formschlüssigen Aufnahme von beidendseitig an Tragestäben befestigten Führungskörpern einer in eine zusammengeschobene Offenstellung oder in eine auseinandergezogene Schließstellung versetzbaren Abdeckplane, wobei jede Führungsschiene im wesentlichen ein C-Profil mit zwei in unterschiedlichen Höhenebenen angeordneten, den Längsschlitz ober- und unterseitig begrenzenden Profilstegen - oberer und unterer Profilsteg - aufweist, deren dem Längsschlitz abgewandte Profilenden durch einen Profilboden miteinander verbunden sind, dadurch gekennzeichnet, daß an zwei diametral gegenüberliegenden Stellen der beiden Führungsschienen (11) je ein Teillängenbereich des jeweils oberen Profilsteges (16) ein gesondertes Abdeckteil (19) bildet, welches eine obere Zugangsöffnung (21) für die Führungskörper (13) und ggf. letztere miteinander verbindender Kupplungsteile (31) freigibt oder verschließt.

2. Laderaumabdeckung nach Anspruch 1, dadurch gekennzeichnet, daß das gesonderte Abdeckteil eine einseitig an der Führungsschiene (11) angelenkte (bei 20) Klappe (19) bildet.

3. Laderaumabdeckung nach Anspruch 2, dadurch gekennzeichnet, daß sich die Anlenkachse (20) der Klappe (19) etwa parallel zu den Längsachsen der Tragestäbe (12) erstreckt.

4. Laderaumabdeckung nach Anspruch 2 oder nach Anspruch 3, dadurch gekennzeichnet, daß jede Klappe (19) benachbart dem schließ- oder öffnungsseitigen Ende (bei B oder A) einer Führungsschiene (11) angeordnet ist.

5. Laderaumabdeckung nach einem der Ansprüche 1 bis 4, dadurch gekennzeichnet, daß die Anlenkachse (20) der Klappe (19) der Einführrichtung (A) der Führungskörper (13) abgewandt ist, derart, daß die Oberseite der sich an die Innenfläche (24) des unteren Profilsteges (17) anlegenden geöffneten Klappe (19) eine etwa rampenartige Einführschrägfläche (25) für die Führungskörper (13) bzw. für die mit letzteren verbundenen Kupplungsteile (31) bildet.

6. Laderaumabdeckung nach einem der vorangehenden Ansprüche, dadurch gekennzeichnet, daß die Anlenkachse (20) zwischen der Zugangsöffnung (21) und einem Aufnahmeraum (27) für je einen Führungskörper (13) eines von der Einführrichtung (A) wegweisenden schließ- oder öffnungsseitig äußeren Tragestabes (12) angeordnet ist.

7. Laderaumabdeckung nach einem der vorangehenden Ansprüche, dadurch gekennzeichnet, daß die Anlenkachse (20) benachbart einem schmalseitigen Rand der Zugangsöffnung (21) unterhalb des oberen Profilsteges (16) angeordnet ist.

8. Laderaumabdeckung nach einem der vorangehenden Ansprüche, dadurch gekennzeichnet, daß die Klappe (19) in ihrer Schließstellung - gegebenenfalls auch in ihrer Öffnungsstellung - arretierbar ist.

9. Laderaumabdeckung nach einem der vorangehenden Ansprüche, dadurch gekennzeichnet, daß die Klappe (19) entgegen der Rückstellkraft einer Feder, beispielsweise einer Schenkelfeder, zu öffnen ist.

10. Laderaumabdeckung nach einem der vorangehenden Ansprüche, dadurch gekennzeichnet, daß das gesonderte Abdeckteil (19) Bestandteil eines an einen Führungsschienen-Abschnitt (E) angesetzten gesonderten endseitigen Führungsschienen-Ansatzes (F) bildet.

11. Laderaumabdeckung nach Anspruch 11, dadurch gekennzeichnet, daß der Führungsschienen-Ansatz (F) ein Kunststoffspritzgußteil ist.

12. Laderaumabdeckung nach Anspruch 10 oder nach Anspruch 11, dadurch gekennzeichnet, daß der Führungsschien-Ansatz (F) einen bezüglich der Führungsschienen-Längsachse nach unten abgebogenen Bereich bildet.

13. Laderaumabdeckung nach einem der vorangehenden Ansprüche, dadurch gekennzeichnet, daß die Klappe (19) mit einer Hebelanordnung bewegungsverbunden ist, welche beim Öffnen der Abdeckplane (15) in Richtung (B) zwecks Öffnung der Klappe (19) von einem Führungskörper (13) oder von einer Tragestange (12) steuerbar ist.

## Claims

1. Boot space cover for vehicles, particularly estate cars, with two guide rails at a transverse distance apart, fixed on the car body side, C-shape profiled, with their longitudinal slits facing each other, for the positive acceptance of guide bodies, fixed to bearing rods at both ends, of a tarpaulin which can be displaced into a telescoped open position or an extended closed position, each guide rail essentially having a C-profile with two profile webs - upper and lower profile web - arranged on different planes of elevation and delimiting the longitudinal slit on the top and the underside, whose profile ends facing away from the longitudinal slit are connected together by a profile base, characterized in that at two diametrically opposed places on the two guide rails (11) a partial longitudinal area of the relevant upper profile web (16) forms a separate cover part (19) which makes accessible or closes an upper access opening (21) for the guide bodies (13) and if required coupling parts (31) connecting the latter together.

2. Boot space cover according to Claim 1, characterized in that the separate cover part forms a flap (19) coupled (at 20) to the guide rail (11) on one side.

3. Boot space cover according to Claim 2, characterized in that the coupling axle (20) of the flap (19) extends approximately parallel to the longitudinal axes of the bearing rods (12).

4. Boot space cover according to Claim 2 or Claim 3, characterized in that each flap (19) is arranged adjacent to the end of a guide rail (11) at the closing or opening side (at B or A).

5. Boot space cover according to one of Claims 1 to 4, characterized in that the coupling axle (20) of the flap (19) faces away from the insertion direction (A) of the guide bodies (13) in such a way that the upper side of the opened flap (19) lying on the inner surface (24) of the lower profile web (17) forms an approximately ramp-like inclined insertion surface (25) for the guide bodies (13) and/or for the coupling parts (31) connected to the latter.

6. Boot space cover according to one of the preceding Claims, characterized in that the coupling axle (20) is arranged between the access opening (21) and an acceptance space (27) for a guide body (13) in each case of a bearing rod (12) external on the closing or opening side and pointing from the insertion direction (A).

7. Boot space cover according to one of the preceding Claims, characterized in that the coupling axle (20) is arranged adjacent to a narrow-side edge of the access opening (21) under the upper profile web (16).

8. Boot space cover according to one of the preceding Claims, characterized in that the flap (19) is lockable in its closing position - if necessary also in its opening position.

9. Boot space cover according to one of the preceding Claims, characterized in that the flap (19) is to be opened against the restoring force of a spring, for example a leg spring.

10. Boot space cover according to one of the preceding Claims, characterized in that the separate cover part (19) forms a constituent part of a separate end-side guide rail projection (F) arranged on a guide rail section (E).

11. Boot space cover according to Claim 11, characterized in that the guide rail projection (F) is a plastic injection-moulded component.

12. Boot space cover according to Claim 10 or Claim 11, characterized in that the guide rail projection (F) forms an area bent downwards with respect to the guide rail longitudinal axis.

13. Boot space cover according to one of the preceding Claims, characterized in that the flap (19) is motionally connected to a lever arrangement which is controllable by a guide body (13) or a bearing rod (12) when the tarpaulin (15) is opened in direction (B) for the purpose of opening the flap (19).

## Revendications

1. Dispositif de recouvrement du compartiment de chargement pour véhicules à moteur, en particulier pour voitures automobiles particulières du type "commerciales", avec deux profilés de guidage en forme de C dont les fentes longitudinales se font face l'une l'autre, qui sont fixés côté carrosserie à un écartement transversal l'un de l'autre et sont destinés à recevoir grâce à leur modelage géométrique des corps de guidage fixés aux deux extrémités de barreaux porteurs d'une bâche de couverture qui peut être positionnée en position d'ouverture repliée sur elle-même, et transformée en position de fermeture par déploiement, tandis que chacun des profilés de guidage présente pour l'essentiel un profilé en forme de C avec deux ailes de profilé - l'aile supérieure et l'aile inférieure du profilé - qui sont disposées à des niveaux de hauteur différents et délimitent par le côté haut et le côté bas la fente longitudinale, et dont les extrémités profilées orientées à l'opposé de la fente longitudinale sont reliées par un fond ou âme de profilé,
caractérisé par le fait qu'en deux endroits situés diamétralement à l'opposé l'un de l'autre sur les deux profilés de guidage (11), un tronçon de l'aile supérieure (16) du profilé correspondant forme sur une longueur partielle un élément de couverture (19) distinct qui libère ou obture un orifice (21) d'accès supérieur pour les corps de guidage (13) et les parties d'accouplement (31) reliant le cas échéant ces derniers les uns aux autres.

2. Dispositif de recouvrement du compartiment de chargement suivant la revendication 1,
caractérisé par le fait que l'élément de couverture distinct forme un volet (19) articulé (à 20) sur un côté sur le profilé de guidage (11).

3. Dispositif de recouvrement du compartiment de chargement suivant la revendication 2,
caractérisé par le fait que le pivot (20) d'articulation du volet (19) s'étend à peu près parallèlement aux axes longitudinaux des barreaux porteurs (12).

4. Dispositif de recouvrement du compartiment de chargement suivant la revendication 2 ou 3,
caractérisé par le fait que chaque volet (19) est placé au voisinage de l'extrémité prévue côté fermeture ou côté ouverture (en B ou A) d'un même profilé de guidage (11).

5. Dispositif de recouvrement du compartiment de chargement suivant l'une des revendications 1 à 4,
caractérisé par le fait que le pivot (20) d'articulation du volet (19) est orienté à l'opposé de la direction d'introduction (A) prévue pour les corps de guidage (13), de manière telle que la face supérieure du volet (19) qui vient, en position d'ouverture, épouser la face intérieure (24) de l'aile inférieure (17) du profilé forme une surface inclinée (25) à peu près du genre rampe pour l'introduction des corps de guidage (13) respectivement les parties d'accouplement (31) reliées à ces derniers.

6. Dispositif de recouvrement du compartiment de chargement suivant l'une des revendications qui précèdent,
caractérisé par le fait que le pivot (20) d'articulation est placé entre l'orifice (21) d'accès et un volume (27) de réception destiné à recevoir un corps de guidage (13) à la fois d'un barreau porteur (12) extérieur qui ouvre la voie dans le sens de la fermeture ou de l'ouverture dans le sens opposé à la direction (A) d'introduction.

7. Dispositif de recouvrement du compartiment de chargement suivant l'une des revendications qui précèdent,
caractérisé par le fait que le pivot (20) d'articulation est placé au voisinage du bord du petit côté de l'orifice (21) d'accès en-dessous de l'aile supérieure (16) du profilé.

8. Dispositif de recouvrement du compartiment de chargement suivant l'une des revendications qui précèdent,
caractérisé par le fait que dans sa position de fermeture - le cas échéant aussi dans sa position d'ouverture - le volet (19) peut être arrêté.

9. Dispositif de recouvrement du compartiment de chargement suivant l'une des revendications qui précèdent,
caractérisé par le fait que le volet (19) doit être ouvert en surmontant la force de rappel d'un ressort, par exemple d'un ressort à deux branches.

10. Dispositif de recouvrement du compartiment de chargement suivant l'une des revendications qui précèdent,
caractérisé par le fait que l'élément (19) de couverture distinct est un élément constitutif d'un embout (F) de profilé de guidage distinct, prévu du côté de l'extrémité en aboutement d'un élément (E) de profilé de guidage.

11. Dispositif de recouvrement du compartiment de chargement suivant la revendication 10,
caractérisé par le fait que l'embout (F) du profilé de guidage est une pièce en matière plastique moulée par injection.

12. Dispositif de recouvrement du compartiment de chargement suivant la revendication 11,
caractérisé par le fait que l'embout (F) du profilé de guidage forme une zone incurvée vers le bas par rapport à l'axe longitudinal du profilé de guidage.

13. Dispositif de recouvrement du compartiment de chargement suivant l'une des revendications qui précèdent,
caractérisé par le fait que le volet (19) est relié d'une manière mobile à un dispositif à leviers qui peut être commandé par un corps de guidage (13) ou par un barreau porteur (12) pour ouvrir le volet (19) lors de l'ouverture de la bâche (15) de couverture dans la direction (B).
